# EUROPÄISCHE PATENTANMELDUNG

(11) **EP 0 685 529 A1**
(43) Veröffentlichungstag der Anmeldung: **06.12.1995**
(21) Anmeldenummer: 95103535.1
(22) Anmeldetag: 11.03.1995
(51) Int. Cl.: C08L 95/00

(54) **Verfahren zur Herstellung von polymermodifiziertem Asphalt**

(30) Priorität: 11.05.1994 DE 4416567
(71) Anmelder: HÜLS AKTIENGESELLSCHAFT, D-45764 Marl (DE)
(72) Erfinder: Bickert, Peter, Dr., D-48149 Münster (DE); Kühnle, Adolf, Dr., D-45772 Marl (DE); Leppek, Heinrich, D-45894 Gelsenkirchen (DE); Müller, Bernd, Dr., D-45768 Marl (DE)

(57) **Zusammenfassung**

Bei der Herstellung von bituminösen Asphaltbelägen unter Verwendung eines amorphen Polyalphaolefins (APAO) zur Asphaltmodifizierung wird im Stand der Technik eine starre Reihenfolge der Zugabe der einzelnen Komponenten verlangt. Demgegenüber stellte sich die Aufgabe, aus Gründen der weiteren Vereinfachung des Herstellungsprozesses hinsichtlich der Wahl des Zeitpunktes der Zugabe des APAO flexibler zu sein.

Diese Aufgabe wurde durch ein Verfahren zur Herstellung bituminöser Asphaltbeläge durch Mischen von körnigem Material mit Bitumen gelöst, bei dem das Asphaltmischgut durch ein APAO so modifiziert wird, daß kein direkter Kontakt zwischen Mineral und APAO in Abwesenheit von Bitumen auftritt.

Mit diesen Verfahren können Beläge von gleichmäßig hoher Qualität hergestellt werden.

## Beschreibung

Die vorliegende Erfindung betrifft ein Verfahren zur Herstellung bituminöser Asphaltbeläge zur Bodenverfestigung für Fahrbahnen, beispielsweise im Straßenbau, durch Mischen von körnigem Material ausgewählter Korngrößen mit Bitumen, wobei das resultierende Mischgut bzw. der Asphalt durch ein amorphes Polyalphaolefin (APAO) derart modifiziert ist, daß während des Mischvorgangs zu keinem Zeitpunkt ein direkter Kontakt zwischen Mineral und APAO in Abwesenheit von Bitumen auftritt. Gegenstand der Erfindung ist auch ein gemäß dem erfindungsgemäßen Verfahren hergestelltes Belagmaterial.

Die wachsende Beanspruchung der Straßen unter den Lasten des stetig zunehmenden Straßenverkehrs sowie die gestiegenen Ansprüche an Qualität und Dauerhaftigkeit der Straßenbeläge erfordern eine ständige Weiterentwicklung der Technologie des Straßenbaus sowie eine Optimierung der hierbei zur Anwendung kommenden Verfahren und Produkte. Im Mittelpunkt des Entwicklungsinteresses stehen dabei die Deck-, Binder- und Tragschichten bituminöser Bauweisen, die durch steigende Verkehrsdichten, höhere Verkehrslasten, extreme Temperaturen sowie die Einwirkung von Tausalz erheblich in Mitleidenschaft gezogen werden. Besonders bei Stadtstraßen mit ampelgesteuerten Verkehrsströmen, bei modernen Schnellstraßen sowie im Bereich von Schwerlast- und Überlast-Verkehr werden gerade an die Strassendecke höchste Anforderungen gestellt, wobei die Grenzen der herkömmlichen Straßenbauweisen und -baustoffe aufgezeigt werden.

Der Lösung dieser Probleme hat man sich durch die Entwicklung neuerer Methoden des Straßenbaus unter Einsatz ausgewählter Minerale und verbesserter Bindemittel bereits ein gutes Stück genähert, wobei auch moderne Bauformen verbreitete Akzeptanz finden, die zur Lösung spezieller Probleme geeignet sind. Hierzu zählen beispielsweise auch sogenannte offene Bauweisen sowie besonders der Splittmastix-Asphalt. Gemeinsames Ziel dieser Entwicklungen ist die Steigerung der Belastbarkeit und Widerstandsfähigkeit der Straße unter gleichzeitiger Einhaltung aller anderen Anforderungen, um so über die gesamte Lebensdauer der Straße zu einem in bezug auf die Herstellungs- und Sanierungskosten insgesamt immer günstigeren Preis-Leistungs-Verhältnis zu gelangen.

In diesem Zusammenhang kommt, neben der richtigen Auswahl der Mineralstoffe, dem Einsatz des geeigneten Bindemittels sowie der Hilfsstoffe zur Asphaltmodifikation eine herausragende Bedeutung zu. In der Praxis hat sich eine Reihe von Modifikationsverfahren etablieren können, die sich je nach Art und Reihenfolge der Mischung der jeweiligen Asphalt-Komponenten unterscheiden lassen.

Bei der Unterteilung der Methoden zur Asphaltmodifikation nach der Art der Komponenten lassen sich zwei Haupttypen unterscheiden: einerseits der Zusatz im wesentlichen bitumensaugender Mittel, wie z. B. Gesteins- oder Cellulosefasern, die es ermöglichen, den Anteil des Bindemittels im Asphalt zu steigern, andererseits der Zusatz polymerer Hilfsstoffe, die das Bitumen in seiner Zusammensetzung positiv verändern und auf diese Weise die gewünschte Eigenschaftsverbesserung des Asphalts ergeben. Beide Maßnahmen können auch kombiniert werden.

Bekannt ist daneben auch, daß man Asphalt durch Zusatz sogenannter Adhäsionsverbesserer bzw. Haftvermittler zum Bitumen modifizieren kann.

Als Polymere zur Eigenschaftsverbesserung von Bitumen haben vor allem Styrol-Butadien-Kautschuke (SBS), Ethylen-Propylen-Kautschuke (EPM bzw. EPDM), Polyethylen, amorphe Polyalphaolefine (APAO) und Ethylen-Vinylacetat-Copolymere (EVA) breite Verwendung gefunden. Daneben werden zahlreiche weitere Polymere, besonders auch auf Basis von Acrylaten und Methacrylaten vorgeschlagen (siehe u.a. EP-A-0 538 581 sowie die dort zitierte Literatur). Die genannten Polymere unterscheiden sich jedoch hinsichtlich ihrer jeweiligen Eigenschaften erheblich und werden daher auf unterschiedliche Weise in den Asphalt eingebracht. Hierzu bedient man sich insbesondere im Falle der Kautschuke üblicherweise der Herstellung von polymermodifiziertem Bitumen, da diese hochmolekularen Polymere aufgrund ihrer hohen Viskosität in der Schmelze nur unter erheblichem Aufwand im Bitumen gelöst werden können. Mit Kautschuken wie SBS und EPDM polymermodifizierte Bitumen sind kommerziell vor allem unter den Handelsnamen STYRELF (Elf), OLEXOBIT (BP) und CARIBIT (Shell) bekannt und werden dann anstelle von unmodifiziertem Bitumen zur Asphaltherstellung eingesetzt. Während die einfache Handhabung polymermodifizierten Bitumens einen Vorteil darstellt, liegen die Nachteile dieses Verfahrens in der aus ökonomischen Gründen erforderlichen Verdoppelung des Aufwands für Lagerhaltung und Transport sowie in der Notwendigkeit zur Beachtung möglicherweise nicht unbegrenzter Lagerstabilität. Hinzu kommt, daß verschiedene Polymere in polymermodifziertem Bitumen in Abhängigkeit von der Lagertemperatur und Lagerzeit unerwünschte Nebenprodukte abspalten können.

Auch Polyethylen ist nicht auf einfache Weise mit Bitumen mischbar. Um trotzdem mit Polyethylen modifiziertes Bitumen herzustellen, wird hier zunächst mit erhöhtem technischen Aufwand eine Vormischung erzeugt, die sich ihrerseits leichter mit Bitumen vereinigen läßt, was dann vorwiegend im Mischtrog des Asphaltmischwerks erfolgen kann. Dieses Mischverfahren entspricht dem der Asphaltmodifikation mit Faserstoffen. Eine Wechselwirkung zwischen Polyethylen und Mineral findet jedoch auch hier nicht statt.

Im Unterschied zu den vorgenannten Polymeren sind amorphe Polyalphaolefine sehr gut mit Bitumen mischbar und führen selbst bei sehr geringem mechanischen Aufwand zur Bildung feindisperser Verteilungen des APAOs im Bitumen. Amorphe Polyalphaolefine sind Homopolymere z. B. aus Propylen oder Buten-1, Copolymere aus Ethylen/Propylen, aus Ethylen/Buten-1, aus Propylen/Buten-1 sowie Terpolymere z.B. aus Ethylen, Propylen, Buten-1 oder anderen einfach ungesättigten Olefinen und unter den Handelsnamen VESTOPLAST® (Hüls) und DURAFLEX® (Shell) kommerziell verfügbar. Die EP-A-0 211 103 lehrt, daß amorphe Polyalphaolefine besonders zur Herstellung polymermodifizierter Asphalte geeignet sind, indem man zunächst das Mineral damit umhüllt und anschließend zur Vormischung Bitumen hinzufügt. Da auch dieses Verfahren im Mischtrog angewandt wird, ist es hinsichtlich der Handhabung dem Einsatz der Faserstoffe im wesentlichen äquivalent und vermeidet den mit dem Einsatz von polymermodifiziertem Bitumen verbundenen erhöhten Aufwand. Schließlich haben sich die besonderen Eigenschaften der APAOs hinsichtlich ihrer Klebkraft, hinsichtlich ihres Vermögens, die Bitumeneigenschaften zu verbessern, sowie speziell hinsichtlich ihrer besonderen Eigenschaften beim Zusammenwirken von Bitumen und Mineral im Asphalt, in der Praxis bewährt.

Nachteilig ist jedoch die nach gegenwärtigem Kenntnisstand geforderte starre Reihenfolge der Zugabe. So wäre es wünschenswert, aus Gründen der weiteren Vereinfachung des Herstellungsprozesses hinsichtlich der Wahl des Zeitpunktes der Zugabe des APAOs flexibler zu sein. So beschreibt bereits die oben erwähnte EP-A-0 211 103 einen möglichen Nachteil der bisherigen Methode: "Je höher die Temperatur ist, umso flüssiger wird das Ummantelungsmaterial und umso besser läßt es sich anwenden. Wenn die Temperatur zu hoch ist, tritt jedoch die Gefahr der Verbrennung auf. Deshalb wird die Anwendungstemperatur etwa von 180 °C bevorzugt." Aus der Praxis ist aber bekannt, daß es selbst in einem gut geführten Asphaltmischwerk immer wieder einmal zu überhöhten Temperaturen des Minerals mit daraus resultierenden negativen Auswirkungen auf die Eigenschaften des Asphaltmischguts kommen kann.

Zum Zwecke der Sicherstellung einer möglichst gleichmäßigen Qualität stellte sich daher die Aufgabe, ein Verfahren zur Herstellung eines mit amorphen Polyalphaolefinen polymermodifizierten Asphalts zu entwickeln, das bezüglich seines Herstellungsverfahrens vereinfacht ist und die geschilderten Nachteile vermeidet.

Überraschend wurde gefunden, daß die gestellte Aufgabe gelöst wird, wenn das Asphaltmischgut aus gesiebtem Material unterschiedlicher Korngrößen und Bitumen durch ein APAO so modifiziert wird, daß kein direkter Kontakt zwischen Mineral und APAO in Abwesenheit von Bitumen auftritt. Hierbei kann das APAO dem Mineral entweder gleichzeitig mit dem Bitumen oder nach dem Bitumen zugesetzt werden. Daneben ist es auch möglich, das APAO dem Bitumen vor der Zugabe zum Mineral zuzusetzen.

Damit wird das von der EP-A-0 211 103 postulierte Vorurteil überwunden.

Das APAO wird bevorzugt in Konzentrationen von 1 bis 10 Gew.-% und besonders bevorzugt von 3 bis 7 Gew.-%, bezogen auf das gesamte Bindemittel, eingesetzt.

Zur Herstellung des Bindemittels wird hierbei bevorzugt Normenbitumen aus der Reihe B 25 bis B 200 und besonders bevorzugt B 80 verwendet.

In einer bevorzugten Ausführungsform wird zusätzlich eine geringe Menge eines geeigneten Haftvermittlers zugegeben. Das APAO und der Haftvermittler können hierbei vorgemischt werden oder aber APAO und Haftvermittler werden separat, entweder gleichzeitig oder nacheinander, dem Mischgut oder dem Bitumen zugemischt. Üblicherweise wird der Haftvermittler in einer Konzentration von 0,01 bis 10 Gew.-%, bezogen auf eingesetztes APAO, verwendet.

Als Haftvermittler geeignet sind Stoffe, deren molekularer Aufbau durch das Vorhandensein sowohl eines polaren als auch eines unpolaren Teils gekennzeichnet ist. Dabei dient der polare Teil zur Ausrichtung des Haftvermittlers auf die Mineraloberfläche und der unpolare Teil zur Anbindung des amorphen Polyalphaolefins und mit ihm des Bitumens an das Mineral.

Solche Haftvermittler können niedermolekular oder hochmolekular sein. Die Einwirkung der polaren Gruppe auf das Mineral kann einerseits auf elektrostatischen Kräften beruhen, z.B. den ionischen Wechselwirkungen anionischer oder kationischer Gruppen des Haftvermittlers mit der Mineraloberfläche, oder aber andererseits durch kovalente Bindung geeigneter funktioneller Gruppen des Haftvermittlers mit der Mineraloberfläche gekennzeichnet sein. Verbindungen, die diesen Ansprüchen entsprechen, sind beispielsweise:
- langkettige Stickstoffbasen wie z.B. Stearylamin, Oleylamin, Dodecyldimethylamin, Dodecylimidazolin sowie Handelsprodukte wie u.a. WANGIT (Wank Chemie), EUREDUR (Schering), VERSAMID (Henkel), DOOMEEN (Akzo), MARLOWET (Hüls);
- quartäre Ammoniumverbindungen wie z.B. Dodecyltrimethylammoniumchlorid sowie Handelsprodukte wie u.a. QUAB (Degussa), SERVAMINE (Servo);
- Alkylsilane wie z.B. Hexadecyltrimethoxysilan sowie Handelsprodukte wie u.a. DYNASILAN (Hüls), NB (Chemiewerk Nünchritz), PROTECTOSIL (Degussa);
- Fettsäuren und Fettsäurederivate wie z.B. Stearinsäure, Rübölfettsäuren, Stearinsäureamid, Handelsprodukte wie u.a. LIPINOL, MARLAMID (Hüls), TEGO (Goldschmidt), sowie andere organische Säuren wie z. B. Harzsäuren oder Harzsäurederivate (Dresinate);
- modifizierte Polymere, die funktionelle Gruppen wie z.B. Säureanhydride (z.B. Maleinsäureanhydrid, Tetrahydrophthalsäureanhydrid), Acrylsäure, Acrylsäurederivate wie etwa Acrylsäureester enthalten, beispielsweise Polyolefincopolymerisate oder gepfropfte Polyolefine, erhältlich u.a. unter den Handelsnamen PRIMACOR (Dow), POLYBOND (BP), OREVAC (Elf), HERCOPRIME (Hercules), EPOLENE (Eastman), HOSTAMONT (Hoechst), EXXELOR (Exxon);
- amin-, ammonium- oder silan-modifizierte Polymere.

Es hat sich als vorteilhaft erwiesen, den Haftvermittler zusammen mit dem APAO dem heißen Mischgut aus Mineral und Bitumen zuzusetzen. Es ist jedoch auch möglich, zunächst eine Mischung aus Bitumen, APAO und Haftvermittler herzustellen und diese dann dem Mineral hinzuzufügen. Ebenfalls möglich ist es, zunächst den Haftvermittler mit Bitumen zu mischen, diese Mischung dem Mineral hinzuzufügen und schließlich das erhaltene Mischgut mit APAO zu versetzen. Nach all diesen Methoden entstehen gleichmäßig hochwertige Asphaltmischgute, die einerseits, der zu lösenden Aufgabe gemäß, das APAO zu keinem Zeitpunkt direkt der Einwirkung des heißen Minerals aussetzen, andererseits den nach dem Stand der Technik erhaltenen polymermodifizierten Asphalten in nichts nachstehen und hinsichtlich ihrer Herstellungssicherheit überlegen sind. Bemerkenswert ist auch, daß anstelle des Minerals auch gewisse Mengen ausgebauten Asphalts zu Recycling-Zwecken verwendet werden können. Selbstverständlich können auch, dem Stand der Technik entsprechend, weitere Additive wie Wachse, Harze, Stabilisatoren (z.B. Antioxidantien), Füllstoffe, aromatische und aliphatische Öle mitverwendet werden. Die Konzentration aller Additive zusammen kann, bezogen auf das APAO, bis zu 50 Gew.% betragen, vorzugsweise liegt sie zwischen 0,01 und 10 Gew.%.

Besonders vorteilhaft ist es, wenn das eingesetzte amorphe Polyalphaolefin bereits mit dem Haftvermittler vermischt ist. Hierdurch entfällt jede weitere Handhabung eines zusätzlichen Materials an der Mischanlage. Eine solche Vorvermischung kann erreicht werden, indem gewisse Anteile des amorphen Polyalphaolefins so modifiziert werden, daß einzelne Polymermoleküle wie oben beschrieben mit polaren oder die Mineraloberfläche kovalent bindenden Gruppen modifiziert sind. Es ist aber auch möglich, andere Haftvermittler, beispielsweise die oben genannten, einer APAO-Schmelze zuzusetzen und diese Mischung in verfestigter oder flüssiger Form zur erfindungsgemäßen Herstellung eines Asphaltheißmischguts einzusetzen. Da granuliertes APAO zur Steigerung des Rieselfähigkeit bekanntermaßen gepudert wird, ist es möglich, dem Pudermittel den Haftvermittler zuzusetzen. Auf diese Weise wird zudem sichergestellt, daß an der Mischanlage kein zusätzlicher Aufwand zur Handhabung der Materialien entsteht.

Als besondere Vorteile des erfindungsgemäßen Verfahrens wurden gefunden:
- eine höhere Effizienz des amorphen Polyalphaolefins und damit Reduzierung der Einsatzmengen gegenüber dem Stand der Technik;
- der Schutz des amorphen Polyalphaolefins vor Verbrennung bei überhöhten Temperaturen durch die Verteilung im Bitumen;
- die höhere Variabilität hinsichtlich der Schmelzviskosität des eingesetzten APAOs in Bereichen von 1.000 bis 100.000 mPas und vorzugsweise 3.000 bis 20.000 mPas bei 190 °C;
- die höhere Variabilität hinsichtlich des Zeitpunkts der Zugabe des - vorzugsweise mit dem Haftvermittler vorvermischten - APAOs, entweder im Mischtrog, gleichzeitig mit oder nach der Zugabe des Bitumens zum Mineral, oder aber durch Vorvermischung mit Bitumen in einem Mischtank;
- die mögliche Verkürzung der Taktzeit des Asphaltmischwerks durch Einsparung der Zeit, die zur Umhüllung des Minerals mit amorphen Polyalphaolefinen nach dem Stand der Technik erforderlich ist.

Im folgenden soll die Erfindung beispielhaft erläutert werden.

### Beispiel 1:

Entsprechend der nachfolgenden Rezeptur wurde ein Belagmaterial hergestellt, indem bei 155 °C Mischtemperatur und 20 Sekunden Mischzeit nacheinander Bitumen und APAO zum vorgelegten Mineral zugegeben wurden. Anschließend wurden bei 155 °C Marshallkörper hergestellt.

| | Rezeptur | Lieferkorn | Gew.-% |
|---|---|---|---|
| 1. | Kalksteinmehl | | 9 |
| 2. | Diabasedelbrechsand | 0/2 | 13 |
| 3. | Diabasedelsplitt | 2/5 | 9 |
| 4. | Diabasedelsplitt | 5/8 | 19 |
| 5. | Diabasedelsplitt | 8/11 | 50 |

| Siebanalyse | | | | |
|---|---|---|---|---|
| mm | < 0,09 | 0,25 | 0,71 | 2 |
| Gew.-% | 10,1 | 3,2 | 3,6 | 4,7 |
| Sieb-% | 10,1 | 13,3 | 16,9 | 21,6 |
| | | Sand = 11,5 Gew.-% | | |

| Siebanalyse | | | | | | | |
|---|---|---|---|---|---|---|---|
| mm | 5 | 8 | 11,2 | 16 | 22,4 | 31,5 | Summe |
| Gew.-% | 11,3 | 18,8 | 46,9 | 1,5 | | | 100 |
| Sieb-% | 32,9 | 51,7 | 98,6 | 100 | 100 | 100 | 100 |
| | Anteile über 2 mm = 78,4 Gew.-% | | | | | | |

| | |
|---|---|
| Rohdichte des Mineralgemisches (bei 25 °C) | 2,855 g/cm³ |
| Bindemittelsorte: | 93 Gew.-% B80 + 7 Gew.-% VESTOPLAST® S |

| | |
|---|---|
| Bindemittelanteil auf 100 Gew.-Tle. Mineral | 7,0 Gew.-Tle. |
| Bindemittelgehalt im gesamten Mischgut | 6,5 Gew.-% |

### Eigenschaften am Marshallkörper:

| | |
|---|---|
| Raumdichte | 2,474 g/cm³ |
| Mineralanteil | 81,0 Vol.-% |
| Bindemittelanteil | 16,1 Vol.-% |
| Hohlraum (ber.)/Wasseraufnahme | 2,9 Vol.-% |
| Rohdichte des Mischgutes (ber.) | 2,548 g/cm³ |
| Hohlraum des Mineralgerüstes | 19,0 Vol.-% |
| mit Bindemittel ausgefüllt | 84,8 % |
| Stabilität bei 60 °C | 6,8 KN |
| Fließwert bei 60 °C | 40,0 1/10 mm |

### Vergleichsbeispiel A:

Es wurde wie in Beispiel 1 vorgegangen mit dem Unterschied, daß entsprechend EP-A-0 211 103 nacheinander APAO und Bitumen zum vorgelegten Mineral zugegeben wurden.

| | Rezeptur | Lieferkorn | Gew.-% |
|---|---|---|---|
| 1. | Kalksteinmehl | | 9 |
| 2. | Diabasedelbrechsand | 0/2 | 13 |
| 3. | Diabasedelsplitt | 2/5 | 9 |
| 4. | Diabasedelsplitt | 5/8 | 19 |
| 5. | Diabasedelsplitt | 8/11 | 50 |

| Siebanalyse | | | | |
|---|---|---|---|---|
| mm | < 0,09 | 0,25 | 0,71 | 2 |
| Gew.-% | 10,1 | 3,2 | 3,6 | 4,7 |
| Sieb-% | 10,1 | 13,3 | 16,9 | 21,6 |
| | | Sand = 11,5 Gew.-% | | |

| Siebanalyse | | | | | | | |
|---|---|---|---|---|---|---|---|
| mm | 5 | 8 | 11,2 | 16 | 22,4 | 31,5 | Summe |
| Gew.-% | 11,3 | 18,8 | 46,9 | 1,5 | | | 100 |
| Sieb-% | 32,9 | 51,7 | 98,6 | 100 | 100 | 100 | 100 |
| | Anteile über 2 mm = 78,4 Gew.-% | | | | | | |

| | |
|---|---|
| Rohdichte des Mineralgemisches (bei 25 °C) | 2,855 g/cm³ |
| Bindemittelsorte: | 93 Gew.-% B80 + 7 Gew.-% VESTOPLAST® S |

| | |
|---|---|
| Bindemittelanteil auf 100 Gew.-Tle. Mineral | 7,0 Gew.-Tle. |
| Bindemittelgehalt im gesamten Mischgut | 6,5 Gew.-% |

### Eigenschaften am Marshallkörper:

| | |
|---|---|
| Raumdichte | 2,451 g/cm³ |
| Mineralanteil | 80,3 Vol.-% |
| Bindemittelanteil | 15,9 Vol.-% |
| Hohlraum (ber.)/Wasseraufnahme | 3,8 Vol.-% |
| Rohdichte des Mischgutes (ber.) | 2,548 g/cm³ |
| Hohlraum des Mineralgerüstes | 19,7 Vol.-% |
| mit Bindemittel ausgefüllt | 80,8 % |
| Stabilität bei 60 °C | 6,9 KN |
| Fließwert bei 60 °C | 38,0 1/10 mm |

### Beispiel 2:

Es wurde wie in Beispiel 1 vorgegangen, wobei zusätzlich 0,3 Gew.-%, bezogen auf das Mineral, einer Cellulosefaser zugegeben wurde.

| | Rezeptur | Lieferkorn | Gew.-% |
|---|---|---|---|
| 1. | Kalksteinmehl | | 9 |
| 2. | Diabasedelbrechsand | 0/2 | 13 |
| 3. | Diabasedelsplitt | 2/5 | 9 |
| 4. | Diabasedelsplitt | 5/8 | 19 |
| 5. | Diabasedelsplitt | 8/11 | 50 |
| 6. | + 0,3 Gew.-% Arbocel | | |

| Siebanalyse | | | | |
|---|---|---|---|---|
| mm | < 0,09 | 0,25 | 0,71 | 2 |
| Gew.-% | 10,1 | 3,2 | 3,6 | 4,7 |
| Sieb-% | 10,1 | 13,3 | 16,9 | 21,6 |
| | | Sand = 11,5 Gew.-% | | |

| Siebanalyse | | | | | | | |
|---|---|---|---|---|---|---|---|
| mm | 5 | 8 | 11,2 | 16 | 22,4 | 31,5 | Summe |
| Gew.-% | 11,3 | 18,8 | 46,9 | 1,5 | | | 100 |
| Sieb-% | 32,9 | 51,7 | 98,6 | 100 | 100 | 100 | 100 |
| | Anteile über 2 mm = 78,4 Gew.-% | | | | | | |

| | |
|---|---|
| Rohdichte des Mineralgemisches (bei 25 °C) | 2,850 g/cm³ |
| Bindemittelsorte: | 93 Gew.-% B80 + 7 Gew.-% VESTOPLAST® S |

| | |
|---|---|
| Bindemittelanteil auf 100 Gew.-Tle. Mineral | 7,0 Gew.-Tle. |
| Bindemittelgehalt im gesamten Mischgut | 6,5 Gew.-% |

### Eigenschaften am Marshallkörper:

| | |
|---|---|
| Raumdichte | 2,445 g/cm³ |
| Mineralanteil | 80,2 Vol.-% |
| Bindemittelanteil | 15,9 Vol.-% |
| Hohlraum (ber.)/Wasseraufnahme | 3,9 Vol.-% |
| Rohdichte des Mischgutes (ber.) | 2,544 g/cm³ |
| Hohlraum des Mineralgerüstes | 19,8 Vol.-% |
| mit Bindemittel ausgefüllt | 80,3 % |

### Vergleichsbeispiel B:

Es wurde wie im Vergleichsbeispiel A vorgegangen, wobei zusätzlich 0,3 Gew.-%, bezogen auf das Mineral, einer Cellulosefaser zugegeben wurde.

| | Rezeptur | Lieferkorn | Gew.-% |
|---|---|---|---|
| 1. | Kalksteinmehl | | 9 |
| 2. | Diabasedelbrechsand | 0/2 | 13 |
| 3. | Diabasedelsplitt | 2/5 | 9 |
| 4. | Diabasedelsplitt | 5/8 | 19 |
| 5. | Diabasedelsplitt | 8/11 | 50 |
| 6. | + 0,3 Gew.-% Arbocel | | |

| Siebanalyse | | | | |
|---|---|---|---|---|
| mm | < 0,09 | 0,25 | 0,71 | 2 |
| Gew.-% | 10,1 | 3,2 | 3,6 | 4,7 |
| Sieb-% | 10,1 | 13,3 | 16,9 | 21,6 |
| | | Sand = 11,5 Gew.-% | | |

| Siebanalyse | | | | | | | |
|---|---|---|---|---|---|---|---|
| mm | 5 | 8 | 11,2 | 16 | 22,4 | 31,5 | Summe |
| Gew.-% | 11,3 | 18,8 | 46,9 | 1,5 | | | 100 |
| Sieb-% | 32,9 | 51,7 | 98,6 | 100 | 100 | 100 | 100 |
| | Anteile über 2 mm = 78,4 Gew.-% | | | | | | |

| | |
|---|---|
| Rohdichte des Mineralgemisches (bei 25 °C) | 2,850 g/cm³ |
| Bindemittelsorte: | 93 Gew.-% B80 + 7 Gew.-% VESTOPLAST® S |

| | |
|---|---|
| Bindemittelanteil auf 100 Gew.-Tle. Mineral | 7,0 Gew.-Tle. |
| Bindemittelgehalt im gesamten Mischgut | 6,5 Gew.-% |

### Eigenschaften am Marshallkörper:

| | |
|---|---|
| Raumdichte | 2,477 g/cm³ |
| Mineralanteil | 81,2 Vol.-% |
| Bindemittelanteil | 16,1 Vol.-% |
| Hohlraum (ber.)/Wasseraufnahme | 2,6 Vol.-% |
| Rohdichte des Mischgutes (ber.) | 2,544 g/cm³ |
| Hohlraum des Mineralgerüstes | 18,8 Vol.-% |
| mit Bindemittel ausgefüllt | 85,9 % |

### Beispiel 3:

Es wurde wie in Beispiel 2 vorgegangen, wobei gleichzeitig mit dem APAO ein Imidazolinderivat (WANGIT) als Haftvermittler zugegeben wurde.

| | Rezeptur | Lieferkorn | Gew.-% |
|---|---|---|---|
| 1. | Kalksteinmehl | | 9 |
| 2. | Diabasedelbrechsand | 0/2 | 13 |
| 3. | Diabasedelsplitt | 2/5 | 9 |
| 4. | Diabasedelsplitt | 5/8 | 19 |
| 5. | Diabasedelsplitt | 8/11 | 50 |
| 6. | + 0,3 Gew.-% Arbocel | | |

| Siebanalyse | | | | |
|---|---|---|---|---|
| mm | < 0,09 | 0,25 | 0,71 | 2 |
| Gew.-% | 10,1 | 3,2 | 3,6 | 4,7 |
| Sieb-% | 10,1 | 13,3 | 16,9 | 21,6 |
| | | Sand = 11,5 Gew.-% | | |

| Siebanalyse | | | | | | | |
|---|---|---|---|---|---|---|---|
| mm | 5 | 8 | 11,2 | 16 | 22,4 | 31,5 | Summe |
| Gew.-% | 11,3 | 18,8 | 46,9 | 1,5 | | | 100 |
| Sieb-% | 32,9 | 51,7 | 98,6 | 100 | 100 | 100 | 100 |
| | Anteile über 2 mm = 78,4 Gew.-% | | | | | | |

| | |
|---|---|
| Rohdichte des Mineralgemisches (bei 25 °C) | 2,850 g/cm³ |
| Bindemittelsorte: | 93 Gew.-Tle. B80 + 7 Gew.-Tle. VESTOPLAST® S + 0,2 Gew.-Tle. WANGIT |

| | |
|---|---|
| Bindemittelanteil auf 100 Gew.-Tle. Mineral | 7,0 Gew.-Tle. |
| Bindemittelgehalt im gesamten Mischgut | 6,5 Gew.-% |

### Eigenschaften am Marshallkörper:

| | |
|---|---|
| Raumdichte | 2,450 g/cm³ |
| Mineralanteil | 80,4 Vol.-% |
| Bindemittelanteil | 15,9 Vol.-% |
| Hohlraum (ber.)/Wasseraufnahme | 3,7 Vol.-% |
| Rohdichte des Mischgutes (ber.) | 2,544 g/cm³ |
| Hohlraum des Mineralgerüstes | 19,6 Vol.-% |
| mit Bindemittel ausgefüllt | 81,2 % |

### Beispiel 4:

Es wurde wie im Beispiel 2 vorgegangen mit dem alleinigen Unterschied, daß ein durch Maleinsäureanhydrid (MSA) modifiziertes VESTOPLAST eingesetzt wurde.

| | Rezeptur | Lieferkorn | Gew.-% |
|---|---|---|---|
| 1. | Kalksteinmehl | | 9 |
| 2. | Diabasedelbrechsand | 0/2 | 13 |
| 3. | Diabasedelsplitt | 2/5 | 9 |
| 4. | Diabasedelsplitt | 5/8 | 19 |
| 5. | Diabasedelsplitt | 8/11 | 50 |
| 6. | + 0,3 Gew.-% Arbocel | | |

| Siebanalyse | | | | |
|---|---|---|---|---|
| mm | < 0,09 | 0,25 | 0,71 | 2 |
| Gew.-% | 10,1 | 3,2 | 3,6 | 4,7 |
| Sieb-% | 10,1 | 13,3 | 16,9 | 21,6 |
| | | Sand = 11,5 Gew.-% | | |

| Siebanalyse | | | | | | | |
|---|---|---|---|---|---|---|---|
| mm | 5 | 8 | 11,2 | 16 | 22,4 | 31,5 | Summe |
| Gew.-% | 11,3 | 18,8 | 46,9 | 1,5 | | | 100 |
| Sieb-% | 32,9 | 51,7 | 98,6 | 100 | 100 | 100 | 100 |
| | Anteile über 2 mm = 78,4 Gew.-% | | | | | | |

| | |
|---|---|
| Rohdichte des Mineralgemisches (bei 25 °C) | 2,850 g/cm³ |
| Bindemittelsorte: | 93 Gew.-% B80 + 7 Gew.-% MSA-modifiziertes VESTOPLAST® |

| | |
|---|---|
| Bindemittelanteil auf 100 Gew.-Tle. Mineral | 7,0 Gew.-Tle. |
| Bindemittelgehalt im gesamten Mischgut | 6,5 Gew.-% |

### Eigenschaften am Marshallkörper:

| | |
|---|---|
| Raumdichte | 2,450 g/cm³ |
| Mineralanteil | 80,4 Vol.-% |
| Bindemittelanteil | 15,9 Vol.-% |
| Hohlraum (ber.)/Wasseraufnahme | 3,7 Vol.-% |
| Rohdichte des Mischgutes (ber.) | 2,544 g/cm³ |
| Hohlraum des Mineralgerüstes | 19,6 Vol.-% |
| mit Bindemittel ausgefüllt | 81,2 % |

Der Belastungstest der Marshallkörper ergab, daß die erfindungsgemäß hergestellten Beläge den gemäß dem Stand der Technik hergestellten Beläge zumindest gleichwertig sind.

## Patentansprüche

1. Verfahren zur Herstellung bituminöser Asphaltbeläge durch Mischen von körnigem Material mit Bitumen,
dadurch gekennzeichnet,
daß das Asphaltmischgut durch ein amorphes Polyalphaolefin (APAO) so modifiziert wird, daß kein direkter Kontakt zwischen Mineral und APAO in Abwesenheit von Bitumen auftritt.

2. Verfahren gemäß Anspruch 1,
dadurch gekennzeichnet,
daß das APAO dem Mineral gleichzeitig mit dem Bitumen oder nach dem Bitumen zugesetzt wird.

3. Verfahren gemäß einem der vorhergehenden Ansprüche,
dadurch gekennzeichnet,
daß das APAO ein Homopolymerisat aus Propylen oder Buten-1, ein Copolymerisat aus Buten-1 und Ethylen, aus Buten-1 und Propylen, aus Ethylen und Propylen oder ein Terpolymer aus Ethylen, Propylen und Buten-1 oder aus Ethylen, Propylen und einem oder mehreren höheren Alkenen ist.

4. Verfahren gemäß einem der vorhergehenden Ansprüche,
dadurch gekennzeichnet,
daß das APAO in Konzentrationen von 1 bis 10 Gew.-% und bevorzugt 3 bis 7 Gew.-%, bezogen auf das gesamte Bindemittel, eingesetzt wird.

5. Verfahren gemäß einem der vorhergehenden Ansprüche,
dadurch gekennzeichnet,
daß das resultierende Mischgut einen Haftvermittler enthält.

6. Verfahren gemäß Anspruch 5,
dadurch gekennzeichnet,
daß der Haftvermittler gleichzeitig mit dem APAO oder nacheinander dem Mischgut oder dem Bitumen zugemischt wird.

7. Verfahren gemäß einem der Ansprüche 5 oder 6,
dadurch gekennzeichnet,
daß der Haftvermittler aus folgenden Substanzklassen ausgewählt wird:
a) Langkettige Stickstoffbasen;
b) Quartäre Ammoniumverbindungen;
c) Alkylsilane;
d) Fettsäuren, Fettsäurederivate sowie andere organische Säuren;
e) Mit funktionellen Gruppen modifizierte Polyolefine.

8. Verfahren gemäß einem der Ansprüche 5 bis 7,
dadurch gekennzeichnet,
daß der Haftvermittler in einer Konzentration von 0,01 bis 10 Gew.-%, bezogen auf eingesetztes APAO, verwendet wird.

9. Verfahren gemäß einem der vorhergehenden Ansprüche,
dadurch gekennzeichnet,
daß zur Herstellung des Bindemittels Normenbitumen aus der Reihe B 25 bis B 200 und bevorzugt B 80 eingesetzt wird.

10. Belagmaterial, hergestellt gemäß einem der vorhergehenden Ansprüche.
